# FASCICULE DE BREVET EUROPEEN

(11) **EP 3 555 486 B1**
(45) Date de publication et mention de la délivrance du brevet: **27.01.2021**
(21) Numéro de dépôt: 17835857.8
(22) Date de dépôt: 18.12.2017
(51) Int. Cl.: F16B 5/06, F41H 5/013, F16B 21/09, F16B 5/02

(54) **DISPOSITIF DE PROTECTION ANTI PROJECTIONS POUR UN MOYEN DE FIXATION ET TRAPPE DE VISITE METTANT EN OEUVRE UN TEL DISPOSITIF**
ANTIGESCHOSSSCHUTZVORRICHTUNG FÜR EINE BEFESTIGUNGSEINRICHTUNG UND INSPEKTIONSLUKE MIT SOLCH EINER VORRICHTUNG
ANTI-PROJECTILE PROTECTION DEVICE FOR AN ATTACHMENT MEANS AND INSPECTION HATCH IMPLEMENTING SUCH A DEVICE

(30) Priorité: 19.12.2016 FR 1601818
(43) Date de publication de la demande: 23.10.2019
(73) Titulaire: NEXTER Systems, 78034 Versailles Cedex (FR)
(72) Inventeur: TANTY, Fabien, 18023 Bourges (FR); MALLAT, Didier, 18023 Bourges (FR); LEBAILLIF, David, 18023 Bourges (FR)
(74) Mandataire: Cabinet Chaillot
(86) Numéro de dépôt international: PCT/FR2017/053638
(87) Numéro de publication internationale: WO 2018/115671

(56) Documents cités:
- DE-U1-202006 013 527
- DE-U1-202006 013 527
- FR-A1- 2 906 852
- FR-A1- 2 906 852
- US-A- 5 600 084
- US-A- 5 600 084
- US-B1- 7 234 890
- US-B1- 7 234 890

## Description

Le domaine technique de l'invention est celui des dispositifs assurant la protection de l'intérieur d'une structure, telle qu'un véhicule, contre la projection d'éléments qui est consécutive à l'explosion d'un engin explosif à proximité de la structure.

On entend ici par structure aussi bien un véhicule, par exemple un véhicule blindé, qu'une structure fixe, telle un poste de commandement.

Lorsqu'un engin explosif, par exemple une mine à effet de souffle, est activé à proximité de la structure, le choc qui en résulte sur les parois de la structure est tel que les éléments fixés aux parois se cisaillent et sont violemment projetés à l'intérieur de la structure, constituant autant de projectiles vulnérants.

Il a été proposé par le brevet FR2929918 de fixer les éléments internes à l'extérieur de la paroi, en concevant des liaisons traversantes. Une telle disposition assure une surface d'appui positive au niveau de la surface externe de la paroi de la structure. On limite ainsi le risque de projection du moyen de fixation.

Cependant les têtes de vis ou de boulons sont toujours susceptibles d'être cisaillées par le choc et de se trouver projetées à l'intérieur de la structure.

On connaît également par le document DE202006013527U1 un dispositif de fixation rapide d'un capotage sur une paroi. Ce dispositif comprend une vis de liaison qui a une tête comportant une base élargie et comporte un moyen de clipsage qui entoure la tête de la vis et qui présente des languettes élastiques qui assurent le maintien d'une plaque d'un capotage sur la vis et à distance de la paroi. Cependant ce dispositif ne permet pas d'empêcher la projection des têtes de vis d'un moyen de fixation d'un organe.

C'est le but de l'invention que de proposer un dispositif de protection anti projections pour de tels moyens de fixation d'un organe attaché à une paroi d'une structure.

Plus particulièrement, selon un mode particulier de réalisation, l'invention permet d'empêcher la projection des moyens de fixation d'une trappe de visite obturant une ouverture d'une paroi tout en maintenant la trappe en position malgré la rupture des fixations de cette dernière.

Ainsi l'invention a pour objet un dispositif de protection anti projections pour un moyen de fixation d'un organe attaché à une paroi d'une structure, dispositif caractérisé en ce qu'il comporte une plaque destinée à être disposée à distance du moyen de fixation et destinée à être fixée directement ou indirectement à la paroi par l'intermédiaire de pattes de liaison déformables, solidaires de la plaque, et sur lesquelles s'engagent des vis de liaison, les têtes des vis de liaison étant destinées à être interposées entre la plaque et la patte considérée, des trous étant aménagés dans la plaque pour permettre le serrage des vis de liaison, les pattes de liaison comportant des encoches permettant d'engager les têtes des vis de liaison entre la plaque et la patte considérée par simple translation de la plaque perpendiculairement aux axes des vis lorsqu'elles sont mises en place dans leurs taraudages.

Selon un mode de réalisation, la plaque est destinée à être fixée directement à la paroi, les vis de liaison étant destinées à être engagées dans la paroi elle- même.

Selon un autre mode de réalisation, le dispositif comporte une plaque destinée à être disposée à distance d'un moyen de fixation d'un organe qui est une trappe de visite obturant une ouverture d'un côté de la paroi, et la plaque est destinée à être fixée indirectement à la paroi en étant fixée à la trappe de visite, les vis de liaison étant destinées à être engagées dans la trappe de visite elle-même, la plaque obturant ainsi l'ouverture de l'autre côté de la paroi.

Avantageusement la plaque pourra porter au moins deux plots placés au voisinage d'un bord de la plaque et assurant une reprise en cisaillement.

Avantageusement la plaque pourra porter au moins une barre placée au voisinage d'un bord de la plaque et assurant une reprise en cisaillement.

L'invention a également pour objet une trappe de visite qui est destinée à obturer une ouverture d'un premier côté d'une paroi et qui est destinée à être fixée à la paroi par des moyens de fixation comportant des têtes disposées d'un second côté de la paroi, trappe de visite caractérisée en ce qu'elle est équipée d'un dispositif de protection anti projections selon l'invention, dispositif comportant une plaque qui est fixée à la trappe de visite par des vis de liaison, la plaque ayant des dimensions supérieures à celle de l'ouverture et étant destinée à venir ainsi couvrir les têtes des moyens de fixation, la plaque étant ainsi destinée à obturer l'ouverture du second côté de la paroi.

La plaque de la trappe de visite pourra porter au moins deux plots placés au voisinage d'un bord de la plaque et assurant une reprise en cisaillement.

La plaque de la trappe de visite pourra porter au moins une barre placée au voisinage d'un bord de la plaque et assurant une reprise en cisaillement.

L'invention sera mieux comprise à la lecture de la description qui va suivre de différents modes de réalisation, description faite en référence aux dessins annexés et dans lesquels :
- La figure la montre en coupe transversale un premier mode de réalisation d'un dispositif de protection selon l'invention, fixé à une paroi, coupe réalisée au niveau de deux pattes de liaison ;
- La figure 1b montre en vue frontale la plaque de ce premier mode de réalisation de l'invention, la vue montrant la face de la plaque destinée à être disposée en regard de la paroi ;
- La figure 2a est un vue agrandie d'une patte de liaison ;
- La figure 2b est une vue agrandie d'une patte de liaison selon une variante d'exécution ;
- La figure 3 est une vue en coupe transversale d'un deuxième mode de réalisation d'un dispositif de protection selon l'invention fixé à une paroi, dispositif positionné en regard d'une trappe de visite, la coupe étant réalisée au niveau de deux pattes de liaison ;
- La figure 4a montre en coupe transversale un troisième mode de réalisation d'un dispositif de protection selon l'invention, fixé à une trappe de visite selon l'invention, coupe réalisée au niveau de deux pattes de liaison ;
- La figure 4b montre en vue frontale la plaque de ce troisième mode de réalisation de l'invention, la vue montrant la face de la plaque destinée à être disposée en regard de la trappe.

En se reportant aux figures la et 1b, un dispositif de protection anti projections 1 selon un premier mode de réalisation de l'invention comporte une plaque 2 qui est fixée directement à une paroi 4 d'une structure, par exemple un véhicule blindé, par des vis de liaison 3 qui sont engagées dans des taraudages de la paroi 4.

La plaque 2 est disposée à distance d'un moyen de fixation 7 d'un organe 8 qui est attaché à la paroi 4 par ce moyen de fixation 7 et sur la face intérieure de celle-ci. Les moyens de fixation 7 sont ici des vis engagées dans des taraudages complémentaires réalisés dans la paroi 4.

Ainsi en cas d'explosion d'un engin à l'extérieur EXT de la structure, les efforts subis par la paroi 4 et les déformations de cette dernière risquent de provoquer le cisaillement du moyen de fixation 7 et la projection de sa tête 7a à l'intérieur INT de la structure. La plaque 2 s'interpose entre le moyen de fixation 7 et l'intérieur INT de la structure. Elle empêche donc la projection de ce moyen de fixation 7 à l'intérieur de la structure et protège ainsi les personnes occupant celle-ci.

Les têtes 3a des vis de liaison 3 sont en appui sur des pattes de liaison 5 qui sont solidaires de la plaque 2. Ces pattes de liaison 5 ont une forme adaptée pour permettre un découplage mécanique de la structure et de la plaque (ici une forme d'étrier). Les pattes de liaison 5 sont liées à la plaque 2, par exemple par des soudures par points 6. Les pattes de liaison 5 sont des éléments déformables et sont réalisées par exemple en acier. Elles sont susceptibles de se déformer, autorisant ainsi un déplacement (par exemple un rapprochement) de la plaque 2 et de la paroi 4.

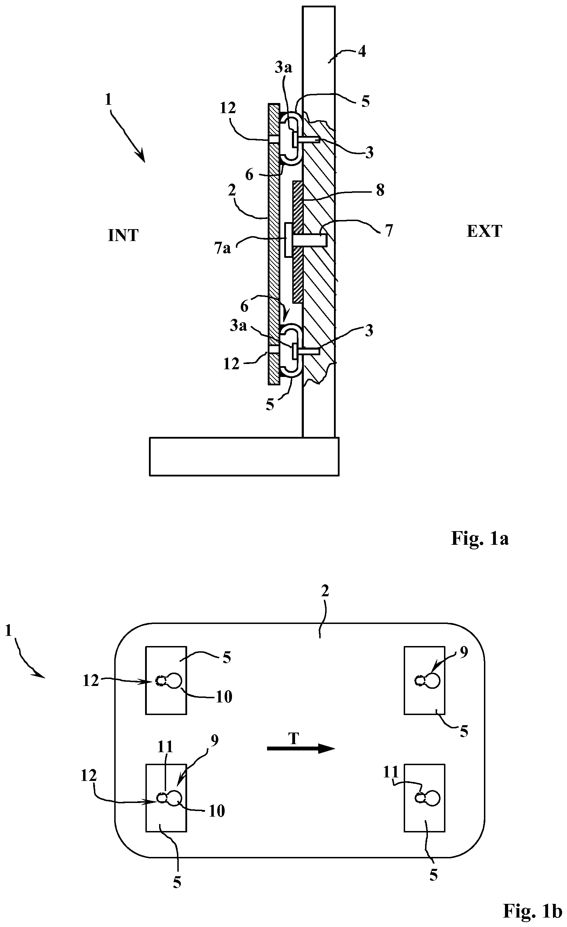

Comme on le voit sur la figure 1b, la plaque 2 porte quatre pattes 5 disposées sensiblement aux angles de la plaque 2. Chaque patte 5 porte une encoche 9 qui permet d'engager la tête 3a d'une vis de liaison 3 entre la plaque 2 et la patte 5 considérée, comme on le voit à la figure la.

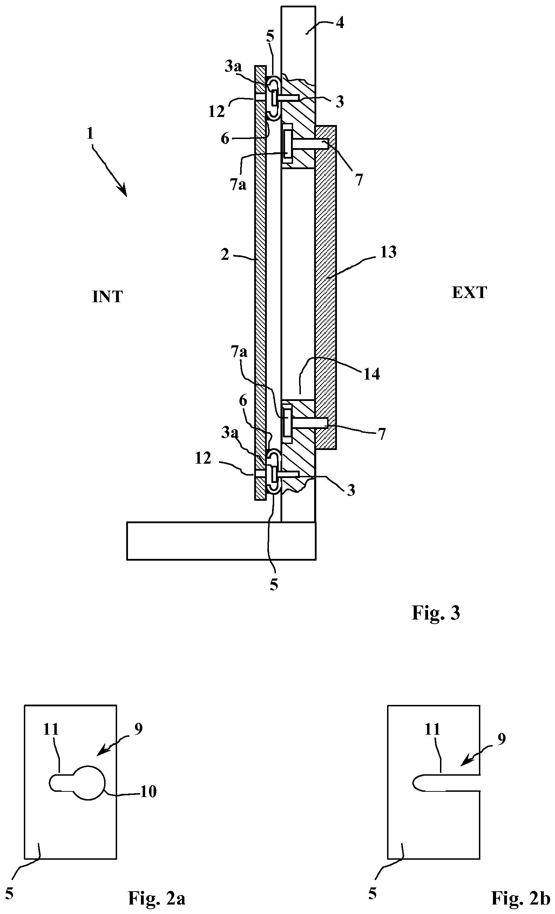

Comme le montrent les figure 1b et 2a, chaque encoche 9 est constituée par un perçage de grand diamètre 10 (diamètre supérieur à celui de la tête 3a de la vis) qui est prolongé par une rainure 11 de largeur inférieure au diamètre de la tête 3a de la vis.

Pour positionner la plaque 2 sur la paroi 4 qui porte déjà les quatre vis de liaison 3, il suffit de placer les têtes 3a des vis en regard des perçages 10. Puis, par une simple translation suivant la direction T de la plaque parallèle aux rainures 11, on positionne les têtes de vis au niveau des rainures 11.

La translation T est effectuée perpendiculairement aux axes des vis 3 lorsqu'elles sont mises en place dans leurs taraudages et toutes les encoches 9 sont orientées de la même façon. Donc on positionne simultanément les quatre têtes 3a des vis 3 entre la plaque 2 et leurs pattes 5.

Comme on le voit sur la figure 1a, la plaque 2 porte également des trous 12 qui sont aussi représentés en pointillés sur la figure 1b. Ces trous 12 se situent en regard des rainures 11 et ils ont un diamètre inférieur à celui des têtes 3a des vis 3. Les trous 12 permettent le passage d'un outil de serrage (non représenté), par exemple un tournevis ou une clé. Il est ainsi possible de procéder, après positionnement de la plaque 2, au serrage des vis de liaison 3. La plaque 2 est alors solidaire de la paroi 4 par l'intermédiaire des vis de liaison 3.

Grâce à l'élasticité de la liaison de la plaque 2 par les pattes 5, la plaque 2 reste solidaire de la paroi 4 malgré le choc. Les déformations de la paroi peuvent par ailleurs être absorbées par les pattes de liaison 5. La fonction de protection contre la projection des moyens de fixation 7 reste donc assurée.

On remarque par ailleurs que, même en cas de rupture d'une tête 3a des vis de liaison 3, cette tête 3a reste piégée entre la plaque 2 et la paroi 4 et n'est donc pas projetée à l'intérieur INT de la structure. Les têtes 3a ne peuvent pas passer au travers des trous 12 dont le diamètre est inférieur à celui des têtes 3a.

A titre de variante représentée à la figure 2b, les encoches 9 pourraient être réalisées sous la forme de simples rainures 11 débouchantes sur un bord latéral de la patte de liaison 5. Dans ce cas il n'est plus nécessaire d'avoir un perçage 10 de gros diamètre puisque le corps de la vis 3 peut s'insérer dans la rainure 11.

La figure 3 montre un deuxième mode de réalisation de l'invention. Ce mode est adapté à la protection contre les projections de moyens de fixation 7 (par exemple des vis) d'une trappe de visite 13 qui obture une ouverture 14 aménagée dans la paroi 4.

Les trappes de visite sont fréquemment utilisées dans les structures fixes ou mobiles telles que les véhicules.

Elles permettent d'obturer un passage vers une zone logeant des équipements ou des organes mécaniques.

Conformément à ce mode de réalisation, la plaque 2 est sensiblement identique à celle décrite en référence aux figures la et 1b. Elle est fixée directement à la paroi 4 par des vis de liaison 3 qui sont engagées dans des taraudages de la paroi 4. La plaque 2 est disposée à distance des moyens de fixation 7 de la trappe 13. Elle a des dimensions suffisantes pour être positionnée en regard de tous les moyens de fixation 7.

Ainsi en cas d'explosion d'un engin à l'extérieur EXT de la structure, la plaque empêche la projection des têtes 7a des moyens de fixation 7 à l'intérieur INT de la structure et protège ainsi les personnes occupant celle-ci.

Comme dans le mode de réalisation précédent, les têtes 3a des vis de liaison 3 sont en appui sur des pattes de liaison 5 qui sont solidaires de la plaque 2. Les pattes de liaison 5 sont là encore des éléments déformables et sont réalisées par exemple en acier. Elles sont susceptibles de se déformer, autorisant ainsi un déplacement (par exemple un rapprochement) de la plaque 2 et de la paroi 4. Comme dans le mode de réalisation précédent, la plaque 2 porte quatre pattes 5 disposées sensiblement aux angles de la plaque 2. La figure 1b peut être considérée comme montrant la forme de la plaque pour ce mode de réalisation. Comme dans le mode de réalisation précédent, chaque patte 5 porte une encoche 9 qui permettra d'engager la tête 3a d'une vis de liaison 3 entre la plaque 2 et la patte 5 considérée.

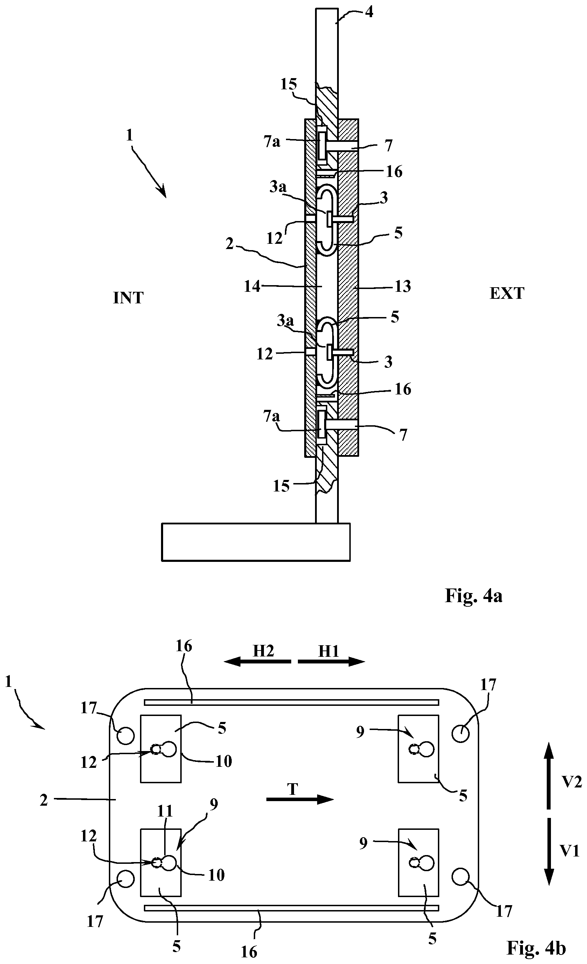

Les figures 4a et 4b montrent un troisième mode de réalisation de l'invention qui diffère du deuxième mode en ce que la plaque 2 est fixée indirectement à la paroi 4 en étant fixée directement à la trappe de visite 13 elle-même. Ce mode montre également une trappe de visite selon l'invention.

A cet effet, la trappe de visite 13 comporte des taraudages permettant de recevoir les vis de liaison 3. Comme dans les modes de réalisation précédents, la plaque 2 porte des pattes de liaison déformables 5, fixées par exemple par soudage. Chaque patte de liaison 5 comporte, comme visible à la figure 4b, une encoche 9 qui permet d'engager la tête 3a d'une vis de liaison 3 entre la plaque 2 et la patte 5 considérée. Chaque encoche 9 est là encore constituée par un perçage de grand diamètre 10 (diamètre supérieur à celui de la tête 3a de la vis) qui est prolongé par une rainure 11 de largeur inférieure au diamètre de la tête 3a de la vis.

Pour positionner la plaque 2 sur la trappe 13 qui porte déjà les quatre vis de liaison 3, il suffit de placer les têtes 3a des vis en regard des perçages 10. Puis, par une simple translation suivant la direction T de la plaque parallèle aux rainures 11, on positionne les têtes de vis au niveau des rainures 11.

La translation T est effectuée perpendiculairement aux axes des vis 3 lorsqu'elles sont mises en place dans leurs taraudages et toutes les encoches 9 sont orientées de la même façon. Donc on positionne simultanément les quatre têtes 3a des vis 3 entre la plaque 2 et leurs pattes 5.

Là encore la plaque 2 porte des trous 12 (figure 4a) qui sont aussi représentés en pointillés sur la figure 4b. Ces trous 12 ont un diamètre inférieur à celui des têtes 3a des vis 3 et permettent le passage d'un outil de serrage permettant, après positionnement de la plaque 2, de serrer les vis de liaison 3. La plaque 2 est alors solidaire de la trappe 13 par l'intermédiaire des vis de liaison 3.

Comme on le voit sur la figure 4a, la plaque 2 a des dimensions telles qu'elle couvre tous les moyens 7 (vis) assurant la fixation de la trappe 13 sur la paroi. Les têtes 7a des moyens de fixation 7 de la trappe 13 étant logées dans des lamages 15 de la paroi 4, la plaque 2 vient en appui sur la paroi 4. La fixation de la plaque 2 sur la trappe 13 est ainsi particulièrement discrète et une certaine étanchéité est assurée entre la plaque 2 et l'ouverture 14.

L'élasticité des pattes de liaison 5 facilite le positionnement de la plaque 2 en appui contre la paroi 4 lors du serrage des vis de liaison 3.

La déformation des pattes 5 permet là encore d'absorber les déformations de la paroi consécutives à une explosion.

Comme on le voit sur les figures 4a et 4b, la plaque 2 porte au moins deux barres 16 qui sont soudées à sa face en regard de la trappe 13. Ces barres 16 constituent des butées verticales coopérant avec les bords horizontaux de l'ouverture 14 pour limiter le déplacement de la plaque 2 suivant les directions V1 et V2. Une telle disposition permet d'éviter par ailleurs le cisaillement des vis de liaison 3 lors d'un déplacement de la plaque 2, par exemple suite à une déformation de la paroi 4 consécutive à l'initiation d'un engin explosif à proximité.

D'une façon analogue la plaque 2 porte quatre plots 17 soudés à sa face en regard de la trappe 13. Ces plots 17 constituent des butées horizontales coopérant avec les bords verticaux de l'ouverture 14 pour limiter le déplacement de la plaque 2 suivant les directions H1 et H2. Une telle disposition permet également d'éviter le cisaillement des vis de liaison 3 lors d'un déplacement horizontal de la plaque 2.

Ce troisième mode de réalisation de l'invention permet d'assurer un maintien en position de la trappe malgré la rupture des moyens de fixation 7. En effet, la plaque 2 reste solidaire de la trappe 13. La surface de la plaque est supérieure à celle de l'ouverture 14. Elle obture donc celle-ci côté intérieur INT. Les barres 16 et les plots 17 positionnent par ailleurs la plaque portant la trappe par rapport à l'ouverture 14.

Il serait bien entendu possible de remplacer chaque barre 16 par deux autres plots 17 disposés au voisinage d'un bord horizontal de la plaque de façon à limiter les déplacements verticaux V1 et V2.

Inversement il serait possible de remplacer chaque plot ou chaque paire de plots 17 par une barre 16 verticale, voisine d'un bord vertical de la plaque, donc disposée de façon à limiter les déplacements horizontaux H1 et H2.

## Revendications

1. Dispositif de protection (1) anti projections pour un moyen de fixation (7) d'un organe (8) attaché à une paroi (4) d'une structure, dispositif comportant une plaque (2) destinée à être disposée à distance du moyen de fixation (7) et destinée à être fixée directement ou indirectement à la paroi (4) par l'intermédiaire de pattes de liaison déformables (5), solidaires de la plaque (2), et sur lesquelles s'engagent des vis de liaison (3), les têtes (3a) des vis de liaison (3) étant destinées à être interposées entre la plaque (2) et la patte (5) considérée, des trous (12) étant aménagés dans la plaque (2) pour permettre le serrage des vis de liaison (3), les pattes de liaison (5) comportant des encoches (9) permettant d'engager les têtes (3a) des vis de liaison (3) entre la plaque (2) et la patte (5) considérée par simple translation de la plaque (2) perpendiculairement aux axes des vis (3) lorsqu'elles sont mises en place dans leurs taraudages.

2. Dispositif de protection anti projections selon la revendication 1, **caractérisé en ce que** la plaque (2) est destinée à être fixée directement à la paroi (4), les vis de liaison (3) étant destinées à être engagées dans la paroi (4) elle- même.

3. Dispositif de protection anti projections selon la revendication 1 et comportant une plaque (2) destinée à être disposée à distance d'un moyen de fixation (7) d'un organe qui est une trappe de visite (13) obturant une ouverture (14) d'un côté de la paroi (4), **caractérisé en ce que** la plaque (2) est destinée à être fixée indirectement à la paroi (4) en étant fixée à la trappe de visite (13), les vis de liaison (3) étant destinées à être engagées dans la trappe de visite (13) elle-même, la plaque (2) obturant ainsi l'ouverture (14) de l'autre côté de la paroi (4).

4. Dispositif de protection anti projections selon une des revendications 1 à 3, **caractérisé en ce que** la plaque (2) porte au moins deux plots (17) placés au voisinage d'un bord de la plaque (2) et assurant une reprise en cisaillement.

5. Dispositif de protection anti projections selon une des revendications 1 à 3, **caractérisé en ce que** la plaque porte au moins une barre (16) placée au voisinage d'un bord de la plaque (2) et assurant une reprise en cisaillement.

6. Trappe de visite (13) destinée à obturer une ouverture (14) d'un premier côté d'une paroi (4) et qui est destinée à être fixée à la paroi par des moyens de fixation (7) comportant des têtes (7a) disposées d'un second côté de la paroi, trappe de visite **caractérisée en ce qu'**elle est équipée d'un dispositif de protection anti projections selon la revendication 3, dispositif comportant une plaque (2) qui est fixée à la trappe de visite (13) par des vis de liaison (3), la plaque (2) ayant des dimensions supérieures à celle de l'ouverture (14) et étant destinée à venir ainsi couvrir les têtes (7a) des moyens de fixation, la plaque (2) étant ainsi destinée à obturer l'ouverture (14) du second côté de la paroi (4).

7. Trappe de visite selon la revendication 6, **caractérisée en ce que** la plaque (2) porte au moins deux plots (17) placés au voisinage d'un bord de la plaque (2) et assurant une reprise en cisaillement.

8. Trappe de visite selon la revendication 6, **caractérisée en ce que** la plaque porte au moins une barre (16) placée au voisinage d'un bord de la plaque (2) et assurant une reprise en cisaillement.

## Patentansprüche

1. Antigeschoss-Schutzvorrichtung (1) für ein Befestigungsmittel (7) eines Organs (8), das an einer Wand (4) einer Struktur angebracht ist, wobei die Vorrichtung eine Platte (2) aufweist, die bestimmt ist, von dem Befestigungsmittel (7) beabstandet angeordnet zu sein und bestimmt ist, mittels verformbarer Verbindungsfüße (5) direkt oder indirekt an der Wand (4) befestigt zu sein, die mit der Platte (2) fest verbunden sind und auf denen Verbindungsschrauben (3) eingeführt sind, wobei die Köpfe (3a) der Verbindungsschrauben (3) bestimmt sind, zwischen der Platte (2) und dem entsprechenden Fuß (5) zwischengestellt zu sein, wobei Löcher (12) in der Platte (2) eingerichtet sind, um das Spannen der Verbindungsschrauben (3) zu erlauben, wobei die Verbindungsfüße (5) Kerben (9) aufweisen, die erlauben, die Köpfe (3a) der Verbindungsschrauben (3) zwischen der Platte (2) und dem entsprechenden Fuß (5) durch einfache Translation der Platte (2) senkrecht zu den Achsen der Schrauben (3) einzuführen, wenn diese in ihren Gewindebohrungen platziert sind.

2. Antigeschoss-Schutzvorrichtung nach Anspruch 1, **dadurch gekennzeichnet, dass** die Platte (2) bestimmt ist, direkt an der Wand (4) befestigt zu sein, wobei die Verbindungsschrauben (3) bestimmt sind, in die Wand (4) selbst eingeführt zu sein.

3. Antigeschoss-Schutzvorrichtung nach Anspruch 1 und aufweisend eine Platte (2), die bestimmt ist, von einem Befestigungsmittel (7) eines Organs, das eine Inspektionsluke (13) ist, die eine Öffnung (14) auf einer Seite der Wand (4) verschließt, beabstandet angeordnet zu sein, **dadurch gekennzeichnet, dass** die Platte (2) bestimmt ist, indirekt an der Wand (4) befestigt zu sein, indem sie an der Inspektionsluke (13) befestigt ist, wobei die Verbindungsschrauben (3) bestimmt sind, in die Inspektionsluke (13) selbst eingeführt zu sein, wobei die Platte (2) somit die Öffnung (14) auf der anderen Seite der Wand (4) verschließt.

4. Antigeschoss-Schutzvorrichtung nach einem der Ansprüche 1 bis 3, **dadurch gekennzeichnet, dass** die Platte (2) mindestens zwei Zapfen (17) trägt, die in der Nähe eines Randes der Platte (2) platziert sind und eine Scherwiederaufnahme gewährleisten.

5. Antigeschoss-Schutzvorrichtung nach einem der Ansprüche 1 bis 3, **dadurch gekennzeichnet, dass** die Platte mindestens einen Stab (16) trägt, der in der Nähe eines Randes der Platte (2) platziert ist und eine Scherwiederaufnahme gewährleistet.

6. Inspektionsluke (13), die bestimmt ist, eine Öffnung (14) auf einer ersten Seite einer Wand (4) zu verschließen und die bestimmt ist, an der Wand durch Befestigungsmittel (7) befestigt zu sein, die Köpfe (7a) aufweisen, die auf einer zweite Seite der Wand angeordnet sind, wobei die Inspektionsluke **dadurch gekennzeichnet ist, dass** sie mit einer Antigeschoss-Schutzvorrichtung nach Anspruch 3 ausgestattet ist, wobei die Vorrichtung eine Platte (2) aufweist, die an der Inspektionsluke (13) durch Verbindungsschrauben (3) befestigt ist, wobei die Platte (2) Abmessungen hat, die größer als die der Öffnung (14) sind und bestimmt ist, somit die Köpfe (7a) der Befestigungsmittel abzudecken, wobei die Platte (2) somit bestimmt ist, die Öffnung (14) auf der zweiten Seite der Wand (4) zu verschließen.

7. Inspektionsluke nach Anspruch 6, **dadurch gekennzeichnet, dass** die Platte (2) mindestens zwei Zapfen (17) trägt, die in der Nähe eines Randes der Platte (2) platziert sind und eine Scherwiederaufnahme gewährleisten.

8. Inspektionsluke nach Anspruch 6, **dadurch gekennzeichnet, dass** die Platte mindestens einen Stab (16) trägt, der in der Nähe eines Randes der Platte (2) platziert ist und eine Scherwiederaufnahme gewährleistet.

## Claims

1. An anti-projectile protection device (1) for an attachment means (7) of a member (8) attached to a wall (4) of a structure, the device including a plate (2) intended to be arranged at a distance from the attachment means (7) and intended to be fixed directly or indirectly to the wall (4) by means of deformable connecting tabs (5) that are secured to the plate (2), and on which connecting screws (3) engage, the heads (3a) of the connecting screws (3) being intended to be interposed between the plate (2) and the tab (5) in question, holes (12) being provided in the plate (2) to allow the connecting screws (3) to be tightened, the connecting tabs (5) comprising notches (9) such that the heads (3a) of the connecting screws (3) can be engaged between the plate (2) and the tab (5) in question, by simple translation of the plate (2) perpendicularly to the axes of the screws (3) when they are installed in their corresponding tapped holes.

2. The anti-projectile protection device according to claim 1, **characterized in that** the plate (2) is intended to be fixed directly to the wall (4), the connecting screws (3) being intended to be engaged in the wall (4) itself.

3. The anti-projectile protection device according to claim 1 and including a plate (2) intended to be arranged at a distance from an attachment means (7) of a member which is an inspection hatch (13) closing an opening (14) on one side of the wall (4), **characterized in that** the plate (2) is intended to be fixed indirectly to the wall (4) while being fixed to the inspection hatch (13), the connecting screws (3) being intended to be engaged in the inspection hatch (13) itself, the plate (2) thus closing the opening (14) on the other side of the wall (4).

4. The anti-projectile protection device according to one of claims 1 to 3, **characterized in that** the plate (2) carries at least two studs (17) arranged in the vicinity of an edge of the plate (2) and providing for a shear take-up.

5. The anti-projectile protection device according to one of claims 1 to 3, **characterized in that** the plate carries at least one bar (16) arranged in the vicinity of an edge of the plate (2) and providing for a shear take-up.

6. An inspection hatch (13) which is intended to close an opening (14) on a first side of a wall (4) and which is intended to be fixed to the wall by attachment means (7) comprising heads (7a) arranged on a second side of the wall, the inspection hatch being **characterized in that** it is equipped with an anti-projectile protection device according to claim 3, the device including a plate (2) which is fixed to the inspection hatch (13) by connecting screws (3), the plate (2) having dimensions that are greater than that of the opening (14) and being intended to thus cover the heads (7a) of the attachment means, the plate (2) being thus intended to close the opening (14) on the second side of the wall (4).

7. The inspection hatch according to claim 6, **characterized in that** the plate (2) carries at least two studs (17) arranged in the vicinity of an edge of the plate (2) and providing for a shear take-up.

8. The inspection hatch according to claim 6, **characterized in that** the plate carries at least one bar (16) arranged in the vicinity of an edge of the plate (2) and providing for a shear take-up.
